(19) Europäisches Patentamt
European Patent Office
Office européen des brevets

(11) **EP 4 039 508 B1**

(12) **EUROPEAN PATENT SPECIFICATION**

(45) Date of publication and mention
of the grant of the patent:
**03.04.2024 Bulletin 2024/14**

(21) Application number: **22151408.6**

(22) Date of filing: **13.01.2022**

(51) International Patent Classification (IPC):
***B60C 19/00*** *(2006.01)*

(52) Cooperative Patent Classification (CPC):
**B60C 19/002**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.02.2021 JP 2021018439**

(43) Date of publication of application:
**10.08.2022 Bulletin 2022/32**

(73) Proprietor: **Sumitomo Rubber Industries, Ltd.
Kobe-shi, Hyogo-ken 651-0072 (JP)**

(72) Inventor: **SASAKI, Tatsuya
Kobe-shi 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 3 431 309      JP-A- 2000 301 920
JP-A- 2010 149 600      US-A1- 2014 246 133**

## Description

### BACKGROUND OF THE INVENTION

#### Field of the Invention

The present invention relates to a pneumatic tire.

#### Background Art

To date, a pneumatic tire which has a tread pattern designed such that a negative ratio in a ground contact width of a tread is higher in a high stiffness region than in a low stiffness region, in order to reduce emission sound caused by vibration of a tread portion, has been known (for example, see Japanese Laid-Open Patent Publication No. 2017-186002).

A pneumatic tire in accordance with the preamble of claim 1 is known from US 2014/246133 A1, JP 2010 149600 A and EP 3 431 309 A1.

However, in the pneumatic tire, drainage performance is degraded in a region in which the negative ratio is low, and it is difficult to obtain good wet performance.

The present invention has been made in view of the above-described circumstances, and a main object of the present invention is to provide a pneumatic tire that allows reduction of vibration of a tread portion to reduce noise without depending on a groove volume.

### SUMMARY OF THE INVENTION

The present invention is directed to a pneumatic tire having a tread portion. The pneumatic tire includes: tread rubber disposed in the tread portion; and a vibration absorber disposed at a tire inner cavity in the tread portion. A natural angular frequency ratio $\alpha$ of the vibration absorber relative to the tread rubber and a damping ratio $\zeta_a$ of the vibration absorber satisfy the following expressions (1) and (2).

$$0.5 \leq \alpha \leq 0.9 \qquad (1)$$

$$3.1 \leq 4\zeta_a + 3\alpha \leq 5.5 \qquad (2)$$

in which

$\alpha = \omega_a/\omega_t$
$\omega_a = (K_a/M_a)^{1/2}$
$K_a$: static spring constant (N/m²) of the vibration absorber
$M_a$: mass (kg) of the vibration absorber
$\omega_t = (K_t/M_t)^{1/2}$
$K_t$: static spring constant (N/m²) of the tread rubber
$M_t$: mass (kg) of the tread rubber

$\zeta_a = C_a/C_{ca}$
$C_a$: damping coefficient (Ns/m) of the vibration absorber
$C_{ca} = 2(M_a \cdot K_a)^{1/2}$, wherein
the static spring constants $K_a$ and Kt and the damping coefficient $C_a$ represent values calculated according to the calculation methods described in JIS K6385.

In the pneumatic tire according to the present invention, the natural angular frequency ratio $\alpha$ preferably satisfies the following expression (3).

$$0.7 \leq \alpha \qquad (3)$$

In the pneumatic tire according to the present invention, the damping ratio $\zeta_a$ preferably satisfies the following expression (4).

$$4\zeta_a + 3\alpha \leq 4.3 \qquad (4)$$

In the pneumatic tire according to the present invention, the vibration absorber is preferably formed of a band-shaped member.

In the pneumatic tire according to the present invention, the band-shaped member is preferably stacked in a tire radial direction.

In the pneumatic tire according to the present invention, the mass $M_a$ of the vibration absorber is preferably 40 to 100% of the mass Mt of the tread rubber.

In the pneumatic tire of the present invention, the natural angular frequency ratio $\alpha$ and the damping ratio $\zeta_a$ of the vibration absorber satisfy expressions (1) and (2). Therefore, the vibration absorber vibrates at a phase opposite to that of the tread rubber, to reduce vibration of the tread portion. Thus, noise can be reduced while a groove volume is ensured and good wet performance is maintained.

### BRIEF DESCRIPTION OF THE DRAWINGS

FIG. 1 is a meridian cross-sectional view of a tire according to one embodiment of the present invention;
FIG. 2 illustrates a dynamic model for vibration of a tread portion shown in FIG. 1; and
FIG. 3 shows a graph representing vibration absorbing performance of pneumatic tires produced as samples by changing a natural angular frequency ratio $\alpha$ and a damping ratio $\zeta_a$.

### DETAILED DESCRIPTION

One embodiment of the present invention will be described below with reference to the drawings.

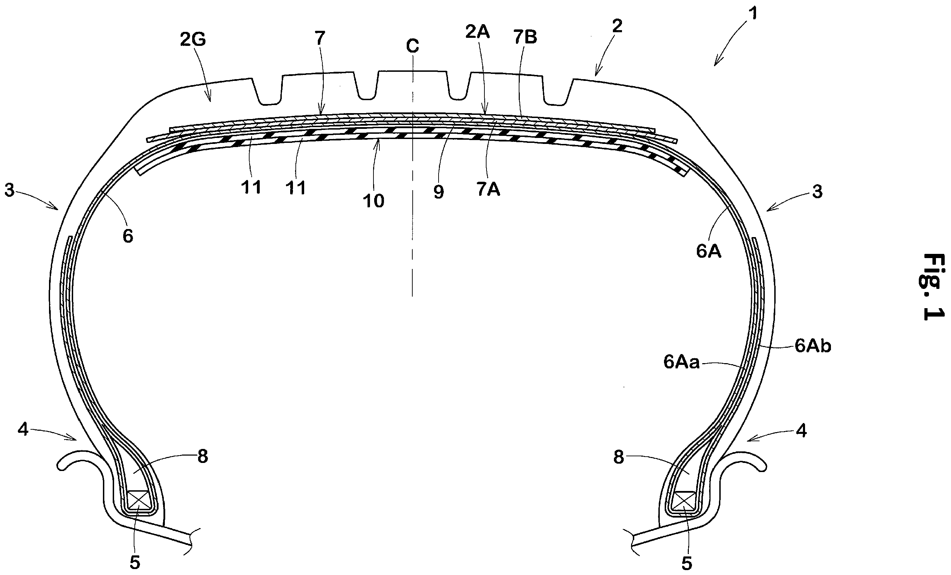

FIG. 1 is a meridian cross-sectional view of a pneumatic tire 1 of the present embodiment. As shown in FIG. 1, the pneumatic tire 1 of the present embodiment includes a tread portion 2, a pair of sidewall portions 3, and a pair of bead portions 4.

The tread portion 2 has tread rubber 2G disposed therein. The tread rubber 2G is disposed tire-radially outward of a tread reinforcing layer 2A disposed in the tread portion 2.

The sidewall portions 3 are formed to be continuous with both end portions, respectively, of the tread portion 2 in the tire axial direction and extend in the tire radially inward direction. The bead portions 4 are formed to be continuous with tire-radially inner end portions of the sidewall portions 3, respectively, and extend in the tire radially inward direction.

The pneumatic tire 1 includes a carcass 6 extending between the pair of bead portions 4, and a belt layer 7 disposed in the tread portion 2.

A bead core 5 is embedded in each bead portion 4. The bead core 5 is, for example, formed so as to have a polygonal cross-sectional shape by winding steel bead wires (not shown) in multiple rows in multiple tiers.

The carcass 6 is disposed between a pair of the bead cores 5. The carcass 6 has at least one carcass ply. The carcass ply is, for example, formed by covering an array of carcass cords with topping rubber. To the carcass cord, for example, organic fibers such as polyester fibers, nylon fibers, rayon fibers, polyethylene naphthalate fibers, and aramid fibers, and steel are applied.

The carcass 6 of the present embodiment has a carcass ply 6A. The carcass ply 6A extends between the pair of the bead cores 5 through the tread portion 2 and the pair of sidewall portions 3.

The carcass ply 6A has a body portion 6Aa extending from the tread portion 2 through the sidewall portions 3 to the bead cores 5, and turned-up portions 6Ab that are continuous with the body portion 6Aa, are turned up around the bead cores 5, respectively, from the inner side toward the outer side in the tire axial direction, and extend outwardly in the tire radial direction. The turned-up portions 6Ab terminate in the sidewall portions 3.

The belt layer 7 is disposed outward of the carcass 6 in the tire radial direction. The belt layer 7 includes at least one belt ply. In the present embodiment, the belt layer 7 includes two belt plies 7A and 7B on the inner side and the outer side in the tire radial direction. The belt plies 7A and 7B are, for example, each formed by covering an array of belt cords with topping rubber. The belt cords of the belt plies 7A and 7B are preferably highly elastic cords such as steel cords.

A band layer (not shown) may be disposed outward of the belt layer 7 in the tire radial direction. The band layer is formed of at least one band ply in which an organic fiber cord is arranged at a small angle such that an angle of the organic fiber cord relative to the tire circumferential direction is, for example, not greater than 10°. The band ply may be either a jointless band formed by helically winding a band cord or a ribbon-like band-shaped ply, or a spliced ply.

The belt layer 7 forms the tread reinforcing layer 2A. Therefore, the tread rubber 2G is disposed tire-radially outward of the belt layer 7 disposed in the tread portion 2. In the pneumatic tire in which the band layer is disposed outward of the belt layer 7 in the tire radial direction, the band layer forms the tread reinforcing layer 2A. Therefore, the tread rubber 2G is disposed tire-radially outward of the band layer disposed in the tread portion 2.

Bead apex rubber 8 is disposed outward of the bead core 5 in the tire radial direction. The bead apex rubber 8 is formed so as to have a substantially triangular cross-sectional shape that is tapered outwardly in the tire radial direction.

An inner liner layer 9 is formed inward of the carcass 6, that is, on a tire inner cavity surface. The inner liner layer 9 is, for example, formed of air-impermeable rubber, and maintains the internal pressure.

The pneumatic tire 1 of the present invention includes a vibration absorber 10 disposed at the tire inner cavity in the tread portion 2. The vibration absorber 10 is disposed inward of the inner liner layer 9 in the tire radial direction. The inner liner layer 9 may not be provided in a region in which the vibration absorber 10 is disposed. In this case, the vibration absorber 10 is disposed inward of the carcass 6 in the tire radial direction.

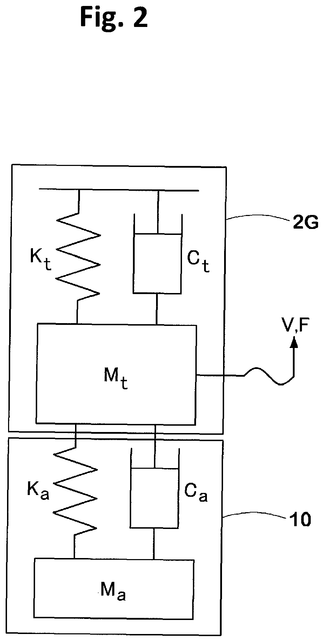

FIG. 2 illustrates a dynamic model for vibration of the tread portion 2.

When $K_a$ represents a static spring constant (N/m$^2$) of the vibration absorber, and
$M_a$ represents a mass (kg) of the vibration absorber, $\omega_a=(K_a/M_a)^{1/2}$ is satisfied.
When Kt represents a static spring constant (N/m$^2$) of the tread rubber, and
Mt represents a mass (kg) of the tread rubber, $\omega_t=(K_t/M_t)^{1/2}$ is satisfied.

The static spring constant represents a value calculated in a calculation method described in JIS K6385 as follows. That is, in accordance with JIS K6385, a load in an expanding and contracting direction is applied to samples of the vibration absorber and the tread rubber in a bidirectional loading method in a static characteristics test, a load-deflection (displacement) relationship is measured, and the relationship is used to calculate the value in the calculation method described in JIS K6385.

Therefore, a natural angular frequency ratio α of the vibration absorber 10 relative to the tread rubber 2G is represented as follows.
$\alpha=\omega_a/\omega_t$

The vibration of the tread portion 2 is formulated as follows.

[Math. 1]

$$\left|\frac{X_t}{X_{st}}\right| = \sqrt{\frac{(\alpha^2-\beta^2)^2+(2\zeta_a\alpha\beta)^2}{A^2+4B^2}}$$

in which

$A=\beta^4-\{(\mu+1)\alpha^2+4\zeta_a\zeta_t\alpha+1\}\beta^2+\alpha^2$
$B=-\{\zeta_t+(\mu+1)\zeta_a\alpha\}\beta^3+(\zeta_t\alpha+\zeta_a)\alpha\beta$
$\mu=M_a/M_t$
$\beta=\omega/\omega_t$
$C_{ca}=2(M_a \cdot K_a)^{1/2}$
$C_{ct}=2(M_t \cdot K_t)^{1/2}$
$C_a$: damping coefficient (Ns/m) of the vibration absorber
$Ct$: damping coefficient (Ns/m) of the tread rubber
$\zeta_a=C_a/C_{ca}$
$\zeta_t=C_t/C_{ct}$
F: excitation force (N)
Vt: tread speed (m/s)
$X_{st}=F/K_t$
$V_t=\omega X_t$

The damping coefficients $C_a$ and Ct are values calculated in the calculation method described in JIS K6385 by measuring a loss spring constant in accordance with JIS K6385.

The inventors of the present invention have found, as a result of thorough studies for vibration of the tread portion 2, that the vibration absorber 10 vibrates at a phase opposite to that of the tread rubber 2G in a case where ranges of the natural angular frequency ratio $\alpha$ and a damping ratio $\zeta_a$ of the vibration absorber 10 satisfy expressions (1) and (2).

$$0.5 \leq \alpha \leq 0.9 \qquad (1)$$

$$3.1 \leq 4\zeta_a + 3\alpha \leq 5.5 \qquad (2)$$

That is, in the pneumatic tire 1, since the natural angular frequency ratio $\alpha$ and the damping ratio $\zeta_a$ of the vibration absorber 10 satisfy expressions (1) and (2), vibration of the vibration absorber 10 and vibration of the tread rubber 2G offset each other, to reduce vibration of the tread portion 2. Thus, noise can be reduced while a groove volume is ensured and good wet performance is maintained.

From the viewpoint that vibration of the vibration absorber 10 and vibration of the tread rubber 2G more effectively offset each other, the natural angular frequency ratio $\alpha$ of the vibration absorber 10 preferably satisfies the following expression (3).

$$0.7 \leq \alpha \qquad (3)$$

From the viewpoint that vibration of the vibration absorber 10 and vibration of the tread rubber 2G more effectively offset each other, the damping ratio $\zeta_a$ of the vibration absorber 10 preferably satisfies the following expression (4).

$$4\zeta_a + 3\alpha \leq 4.3 \qquad (4)$$

The vibration absorber 10 is preferably formed of a band-shaped member 11. By adhering the band-shaped member 11 to an inner circumferential surface of a vulcanized tire, the vibration absorber 10 can be easily disposed at the tire inner cavity in the tread portion 2.

The band-shaped member 11 is preferably stacked in the tire radial direction. In the pneumatic tire 1 shown in FIG. 1, two layers of the band-shaped members 11 are disposed at the tire inner cavity in the tread portion 2. The number of stacked layers of the band-shaped members 11 may be greater than or equal to three. In the structure in which the band-shaped members 11 are stacked in the tire radial direction, the mass $M_a$ of the vibration absorber can be easily adjusted.

The mass $M_a$ of the vibration absorber 10 is preferably 40 to 100% of the mass Mt of the tread rubber. In a case where the mass $M_a$ is greater than or equal to 40% of the mass Mt, vibration of the tread portion 2 is further reduced. Meanwhile, in a case where the mass $M_a$ is less than or equal to 100% of the mass Mt, increase of the weight of the pneumatic tire 1 is inhibited.

Although the pneumatic tire 1 of the present invention has been described above in detail, the present invention is not limited to the above-described specific embodiments, and various modifications can be made to implement the present invention within the scope of the appended claims.

Examples

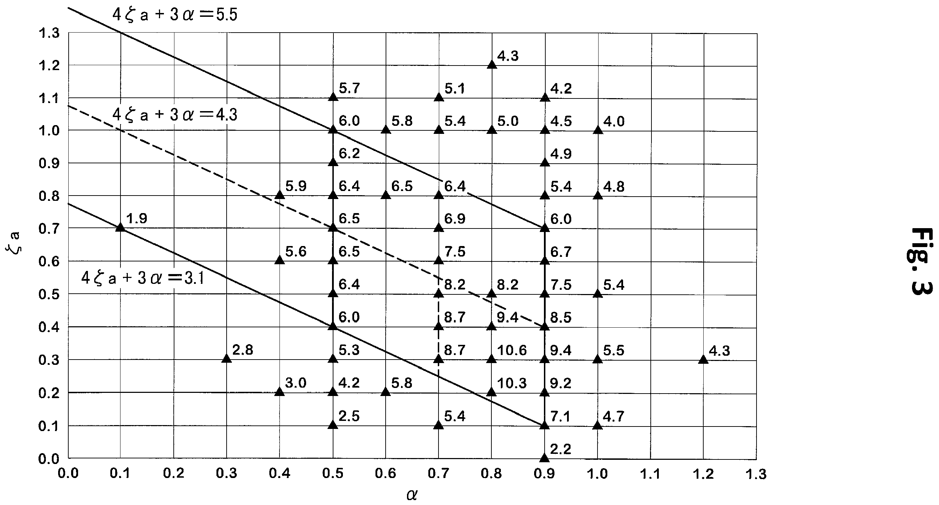

Non-pattern pneumatic tires which had the basic structure in FIG. 1 and in which the natural angular frequency ratios $\alpha$ and the damping ratios $\zeta_a$ were combined in various manners were produced as samples, and the vibration absorbing performance was evaluated (see FIG. 3). The test method was as follows.

<Vibration absorbing performance>

Each sample tire having a size of 265/65R18 was mounted on the same rim, and was inflated to an internal pressure of 230 kPa, and was placed on a rubber tube. In this state, frequency characteristics of a transfer function (acceleration/excition force) was measured when the tread was vibrated, and a peak level was detected. The result was represented by a reduction allowance dB(A) with respect to a reference tire having no vibration absorber, and represented by a value indicated at each coordinate in FIG. 3. The greater the value is, the better the result is.

As is apparent from FIG. 3, it can be confirmed that the pneumatic tires of examples exhibited significantly enhanced vibration absorbing performance as compared with comparative examples.

## Claims

1. A pneumatic tire (1) comprising:

   a tread portion (2);
   tread rubber (2G) disposed in the tread portion (2); and
   a vibration absorber (10) disposed at a tire inner cavity in the tread portion (2),
   **characterized in that**
   a natural angular frequency ratio $\alpha$ of the vibration absorber (10) relative to the tread rubber (2G) and a damping ratio $\zeta_a$ of the vibration absorber (10) satisfy the following expressions (1) and (2),

$$0.5 \leq \alpha \leq 0.9 \tag{1}$$

$$3.1 \leq 4\zeta_a + 3\alpha \leq 5.5 \tag{2}$$

   in which

   $\alpha = \omega_a/\omega_t$
   $\omega_a = (K_a/M_a)^{1/2}$
   $K_a$: static spring constant (N/m$^2$) of the vibration absorber (10)
   $M_a$: mass (kg) of the vibration absorber (10)
   $\omega_t = (K_t/M_t)^{1/2}$
   Kt: static spring constant (N/m$^2$) of the tread rubber (2G)
   Mt: mass (kg) of the tread rubber (2G)
   $\zeta_a = C_a/C_{ca}$
   $C_a$: damping coefficient (Ns/m) of the vibration absorber (10)
   $C_{ca} = 2(M_a \cdot K_a)^{1/2}$, wherein
   the static spring constants $K_a$ and Kt and the damping coefficient $C_a$ represent values calculated according to the calculation methods described in JIS K6385.

2. The pneumatic tire (1) according to claim 1, wherein the natural angular frequency ratio $\alpha$ satisfies the following expression (3).

$$0.7 \leq \alpha \tag{3}$$

3. The pneumatic tire (1) according to claim 1 or 2, wherein the natural angular frequency ratio $\alpha$ and the damping ratio $\zeta_a$ satisfy the following expression (4).

$$4\zeta_a + 3\alpha \leq 4.3 \tag{4}$$

4. The pneumatic tire (1) according to any one of claims 1 to 3, wherein the vibration absorber (10) is formed of a band-shaped member (11).

5. The pneumatic tire (1) according to claim 4, wherein the band-shaped member (11) is stacked in a tire radial direction.

6. The pneumatic tire (1) according to any one of claims 1 to 5, wherein the mass $M_a$ of the vibration absorber (10) is 40 to 100% of the mass Mt of the tread rubber (2G).

## Patentansprüche

1. Luftreifen (1), umfassend:

   einen Laufflächenabschnitt (2);
   Laufflächengummi (2G), der in dem Laufflächenabschnitt (2) angeordnet ist; und
   einen Schwingungsdämpfer (10), der an einem Reifeninnenhohlraum in dem Laufflächenabschnitt (2) angeordnet ist,
   **dadurch gekennzeichnet, dass**
   ein Eigenwinkelfrequenzverhältnis $\alpha$ des Schwingungsdämpfers (10) relativ zu dem Laufflächengummi (2G) und ein Dämpfungsverhältnis $\zeta_a$ des Schwingungsdämpfers (10) die folgenden Ausdrücke (1) und (2) erfüllen,

$$0,5 \leq \alpha \leq 0,9 \tag{1}$$

$$3,1 \leq 4\zeta_a + 3\alpha \leq 5,5 \tag{2}$$

   wobei

   $\alpha = \omega_a/\omega_t$
   $\omega_a = (K_a/M_a)^{1/2}$
   $K_a$: statische Federkonstante (N/m$^2$) des Schwingungsdämpfers (10)
   $M_a$: Masse (kg) des Schwingungsdämpfers (10)
   $\omega_t = (K_t/M_t)^{1/2}$
   $K_t$: statische Federkonstante (N/m$^2$) des

Laufflächengummis (2G)

$M_t$: Masse (kg) des Laufflächengummis (2G)

$\zeta_a = C_a/C_{ca}$

$C_a$: Dämpfungskoeffizient (Ns/m) des Schwingungsdämpfers (10)

$C_{ca} = 2(M_a \cdot K_a)^{1/2}$, wobei

die statischen Federkonstanten $K_a$ und Kt und der Dämpfungskoeffizient $C_a$ Werte darstellen, die gemäß den in JIS K6385 beschriebenen Berechnungsverfahren berechnet werden.

2. Luftreifen (1) nach Anspruch 1, wobei das Eigenwinkelfrequenzverhältnis $\alpha$ den folgenden Ausdruck (3) erfüllt.

$$0,7 \leq \alpha \qquad (3)$$

3. Luftreifen (1) nach Anspruch 1 oder 2, wobei das Eigenwinkelfrequenzverhältnis $\alpha$ und das Dämpfungsverhältnis $\zeta_a$ den folgenden Ausdruck (4) erfüllen.

$$4\zeta_a + 3\alpha \leq 4,3 \qquad (4)$$

4. Luftreifen (1) nach einem der Ansprüche 1 bis 3, wobei der Schwingungsdämpfer (10) aus einem bandförmigen Element (11) gebildet ist.

5. Luftreifen (1) nach Anspruch 4, wobei das bandförmige Element (11) in einer Reifenradialrichtung gestapelt ist.

6. Luftreifen (1) nach einem der Ansprüche 1 bis 5, wobei die Masse $M_a$ des Schwingungsdämpfers (10) 40 bis 100 % der Masse Mt des Laufflächengummis (2G) beträgt.

**Revendications**

1. Bandage pneumatique (1) comprenant :

une portion formant bande de roulement (2) ;
un caoutchouc de bande de roulement (2G) disposé dans la portion formant bande de roulement (2) ; et
un amortisseur de vibrations (10) disposé au niveau d'une cavité intérieure du pneumatique dans la portion formant bande de roulement (2), **caractérisé en ce que**

un rapport de fréquence angulaire naturelle $\alpha$ de l'amortisseur de vibrations (10) relativement au caoutchouc de bande de roulement (2G) et un rapport d'amortissement $\zeta_a$ de l'amortisseur de vibrations (10) satisfont les expressions (1) et (2) suivantes,

$$0,5 \leq \alpha \leq 0,9 \qquad (1)$$

$$3,1 \leq 4\zeta_a + 3\alpha \leq 5,5 \qquad (2)$$

dans lesquelles

$\alpha = \omega_a/\omega_t$
$\omega_a = (K_a/M_a)^{1/2}$
$K_a$: constante de rappel statique (N/m²) de l'amortisseur de vibrations (10)
$M_a$ : masse (kg) de l'amortisseur de vibrations (10)
$\omega_t = (K_t/M_t)^{1/2}$
$K_t$ : constante de rappel statique (N/m²) du caoutchouc de bande de roulement (2G)
$M_t$ : masse (kg) du caoutchouc de bande de

roulement (2G)   $\zeta_a = C_a/C_{ca}$
$C_a$ : coefficient d'amortissement (Ns/m) de l'amortisseur de vibrations (10)
$C_{ca} = 2(M_a \cdot K_a)^{1/2}$, où
les constantes de rappel statiques $K_a$ et Kt et le coefficient d'amortissement $C_a$ représentent des valeurs calculées conformément aux méthodes de calcul décrites dans la norme industrielle japonaise JIS K6385.

2. Bandage pneumatique (1) selon la revendication 1, dans lequel le rapport de fréquence angulaire naturelle $\alpha$ satisfait l'expression (3) suivante :

$$0,7 \leq \alpha \qquad (3).$$

3. Bandage pneumatique (1) selon la revendication 1 ou 2, dans lequel le rapport de fréquence angulaire

naturelle $\alpha$ et le rapport d'amortissement $\zeta_a$ satisfont l'expression (4) suivantes :

$$4\zeta_a + 3\alpha \leq 4,3 \qquad (4).$$

4. Bandage pneumatique (1) selon l'une quelconque des revendications 1 à 3, dans lequel l'amortisseur de vibrations (10) est formé d'un élément en forme de bande (11).

5. Bandage pneumatique (1) selon la revendication 4, dans lequel l'élément en forme de bande (11) est empilé dans une direction radiale du pneumatique.

**6.** Bandage pneumatique (1) selon l'une quelconque des revendications 1 à 5, dans lequel la masse $M_a$ de l'amortisseur de vibrations (10) est de 40 à 100 % de la masse Mt du caoutchouc de bande de roulement (2G).

# Fig. 1

# Fig. 2

# Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017186002 A
- US 2014246133 A1
- JP 2010149600 A
- EP 3431309 A1